# EUROPÄISCHE PATENTSCHRIFT

(11) **EP 0 836 971 B1**
(45) Veröffentlichungstag und Bekanntmachung des Hinweises auf die Patenterteilung: **17.07.2002**
(21) Anmeldenummer: 97114176.7
(22) Anmeldetag: 18.08.1997
(51) Int. Cl.: B60R 21/32, B60R 21/20

(54) **Insassenschutzeinrichtung für ein Fahrzeug**
Occupant protecting arrangment for a vehicle
Système de protection des occupants pour un véhicule

(30) Priorität: 22.08.1996 DE 19633743; 27.08.1996 DE 19634472; 01.03.1997 DE 19708345
(43) Veröffentlichungstag der Anmeldung: 22.04.1998
(73) Patentinhaber: Volkswagen Aktiengesellschaft, 38436 Wolfsburg (DE)
(72) Erfinder: Sinnhuber, Ruprecht, Dipl.-Ing., 38518 Gifhorn (DE)

(56) Entgegenhaltungen:
- DE-A- 4 041 049
- DE-A- 19 526 334
- DE-A- 19 611 384
- FR-A- 2 260 470
- US-A- 5 280 953
- US-A- 5 282 646

## Beschreibung

Die Erfindung betrifft eine Insassenschutzeinrichtung für ein Fahrzeug gemäß dem Oberbegriff des Patentanspruchs 1 (siehe z.B. DE 40 41 049 A1).

Sogenannte Airbag-Einrichtungen mit von Aufblaseinrichtungen füllbaren Luftsäcken sind zum Unfallschutz für Fahrzeuginsassen mittlerweile weit verbreitet und haben sich im allgemeinen bewährt. In der jüngeren Zeit konzentrieren sich hinsichtlich der Optimierung derartiger Insassenschutzeinrichtungen die Bemühungen darauf, das sogenannte "Out-ofposition"-Problem zufriedenstellend zu lösen. Dieser Problemkreis wird in der Beschreibungseinleitung der DE 195 26 547 ausführlich abgehandelt. Auf die dortigen Ausführungen in den Spalten 1 bis 3 (welche jedoch nicht zum Gegenstand der Erdindung gehören) wird hier ausdrücklich Bezug genommen.

Zur Lösung des Problems sind unterschiedliche Vorgehensweisen bekannt geworden. So gehören beispielsweise die DE-38 09 074-A1, DE-40 23 109-A1, US-5,366,241 und DE-43 41 500 zu einer Gattung von Insassenschutzeinrichtungen, bei denen die Position oder Haltung des jeweiligen Fahrzeuginsassen durch eine mehr oder weniger aufwendige Sensorik permanent erfaßt wird, um dann bei einem Fahrzeugunfall den aufblasbaren Luftsack angepaßt zu füllen. Ggf. kann auch die Unterdrückung der Luftsackfüllung vorgesehen werden, wie dies beispielsweise in der EP 0 458 102-A1 beschrieben ist. Die letztgenannte Sicherheitseinrichtung ist apparativ sehr einfach, ermöglicht aber keine gezielte Steuerung des Aufblasverhaltens für Insassen, die sich in einer "Out-of-position"-Haltung auf dem Fahrzeugsitz befinden.

Eine zweite Gattung von Insassenschutzeinrichtungen sieht zur Behebung des "Out-ofposition"-Problems konstruktive Maßnahmen am Luftsack und/oder am Gasgeneratorgehäuse vor. Diesbezüglich können als Stand der Technik genannt werden die DE 43 34 606-A1, DE-195 26 547-A1, DE-195 15 980-A1, US-5,405,166 und US-5,501,488. Insbesondere in den beiden letztgenannten Schriften wird beschrieben, wie durch den Kontakt eines

Hüllenabschnitts des Luftsackes dessen Ausbreitungsgeschwindigkeit herabgesetzt wird. Die Luftsäcke selbst sind so gestaltet, daß beim Auftreffen der Hülle auf ein Hindernis der aus einem Gasgenerator austretende Massenstrom gesteuert wird. Auf diese Weise kann ein Anschießen des Hindernisses (beispielsweise ein im Fußraum stehendes Kind oder ein in "Out-of-position"-Haltung befindlicher Fahrzeuginsasse) mit dem vollen Massenstrom unterbunden oder eingeschränkt werden.

Vor diesem Hintergrund liegt der Erfindung die Aufgabe zugrunde, eine Insassenschutzeinrichtung bereitzustellen, bei der mit verhältnismäßig geringem apparativem Aufwand das "Out-of-position"-Problem zufriedenstellend gelöst werden kann.

Diese Aufgabe wird gelöst mit einer Insassenschutzeinrichtung gemäß den Merkmalen des Patentanspruchs 1. Die Unteransprüche betreffen besonders zweckmäßige Weiterbildungen der Erfindung.

Erfindungsgemäß wird also eine ohnehin im Fahrzeug vorhandene Sensorik zur Auslösung und ggf. auch zur Beeinflussung der Füllcharakteristik des Luftsackes dahingehend ergänzt, daß das Ausbreitungsverhalten-beispielsweise die Ausbreitungsgeschwindigkeit- eines vorgegebenen Hüllenabschnitts des Luftsackes erfaßbar ist. Zu diesem Zweck werden signalerzeugende Elemente mit einer Steuereinrichtung in der Weise verbunden, daß durch diese die Aufblaseinrichtung und damit auch die Füllcharakteristik des Luftsackes beeinflußbar ist. Die Erfindung basiert also auf der erfinderseitigen Überlegung, daß beim Auftreffen der Luftsackhülle auf ein Hindernis der dem Hindernis zugewandte Hüllenabschnitt in seiner Bewegung verlangsamt oder gänzlich aufgehalten wird. Das hieraus beispielsweise von einem Weg- oder Kraftaufnehmer ableitbare Signal wird genutzt, um bei mehrstufigen Aufblaseinrichtungen beispielsweise die Zündung der zweiten oder jeden weiteren Stufe zu unterdrücken oder bei einer einstufigen Aufblaseinrichtung den Massenstrom zu begrenzen oder am Luftsack vorbei beispielsweise in den Fußraum hinein oder hinter die Amaturtafel zu leiten.

Ein besonderer Vorteil der erfindungsgemäßen Lösung ist darin zu sehen, daß bereits vorhandene Insassenschutzeinrichtungen lediglich um die Sensorelemente zur Erfassung der Ausbreitungsgeschwindigkeit zu ergänzen sind. Ein Zugglied nach Art eines Seiles, Bandes oder Schlauches kann analog zur Integration von Fangbändern in bisherigen Insassenschutzeinrichtungen (siehe beispielsweise die oben bereits genannte DE-43 34 606-A1) problemlos durch Vernähung eingebracht werden. Für die Weg- oder Kraftaufnehmer kann ebenfalls konventionelle Technik zum Einsatz gelangen. Eine besonders einfache Lösung besteht beispielsweise darin, daß das Zugglied auf ein Rotations- oder Linear-Seilpotentiometer oder einen Tachometer wirkt, dessen Tachometerwelle während der Füllung des Luftsackes von dem Zugglied in Drehungen versetzt wird. Das auf diese Weise erzeugte Signal kann dann in einer ohnehin schon für die Auslösung des Airbags vorhandenen Steuereinrichtung verarbeitet werden.

Ein weiterer Vorteil der erfindungsgemäßen Insassenschutzeinrichtung ist darin zu sehen, daß die Sensorelemente zur Erfassung des Ausbreitungsverhaltens nur dann in Betrieb sein müssen, wenn ein Unfallgeschehen erkannt wird. Demgegenüber verlangen die eingangs genannten Permanent-Überwachungen einen ständigen Betrieb sämtlicher Steuer- und Sensorelemente.

Ein vorteilhaftes Ausführungsbeispiel der Erfindung ist in der Zeichnung schematisch dargestellt. Es zeigt.
- Figur 1:: ein Fahrzeug mit wesentlichen Elementen der erfindungsgemäßen Insassenschutzeinrichtung,
- Figur 2:: eine Ansicht gemäß dem Ausschnitt A in Figur 1 für eine erste Lösungsvariante,
- Figur 3:: eine Ansicht gemäß dem Ausschnitt A in Figur 1 für eine zweite Lösungsvariante,
- Figur 4:: eine Ansicht gemäß dem Ausschnitt A in Figur 1 für eine dritte Lösungsvariante,
- Figur 5:: ein Diagramm zum Weg-Zeit-Verhalten eines vorgegebenen Hüllenabschnittes,
- Figur 6:: ein Diagramm zum Kraft-Zeit-Verhalten für einen vorgegebenen Hüllenabschnitt.
- Figur 7:: eine weitere Variante für eine das Ausbreitungsverhalten erfassende Sensorik,
- Figur 8:: ein Diagramm zur Beschreibung der in Figur 7 skizzierten Sensorik.

In allen Figuren weisen gleiche Bauteile die gleiche Bezifferung auf.

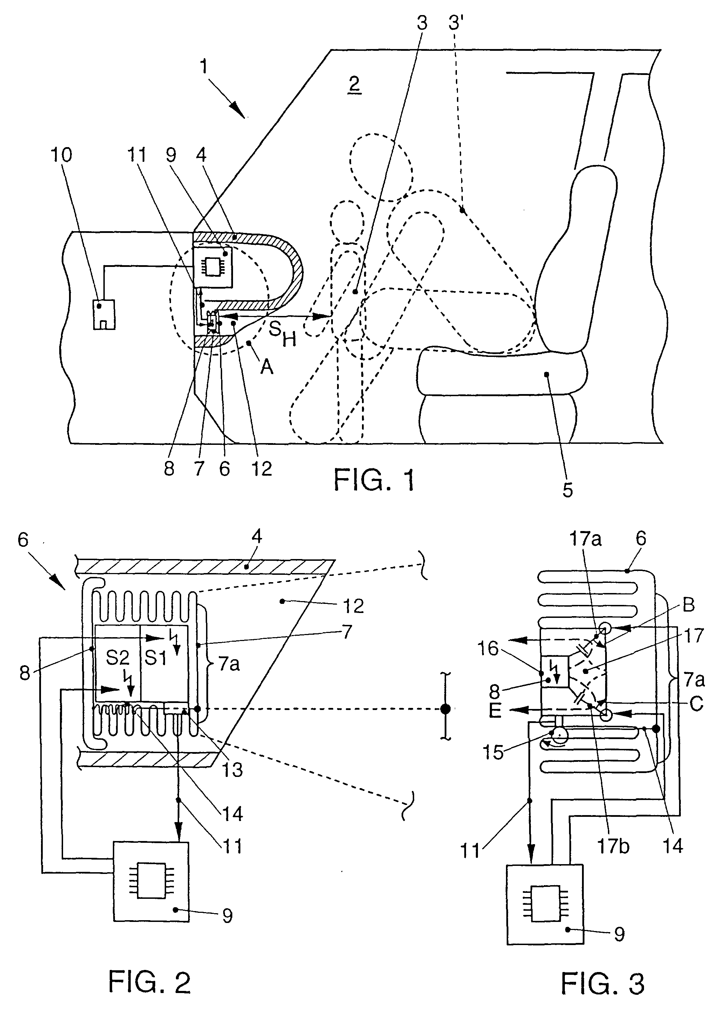

Man erkennt in Figur 1 ein insgesamt mit 1 bezeichnetes Fahrzeug, in dessen Fahrgastzelle 2 ein kindlicher Insasse 3 sich zwischen einer Armaturentafel 4 und einem Fahrzeugsitz 5 stehend aufhält. Dieser auf Unachtsamkeit oder Gleichgültigkeit des Fahrzeugbedieners zurückgehende Aufenthaltsort des kindlichen Insassen 3 stellt für einen innerhalb des Armaturenbrettes 4 untergebrachten Airbagmodul 6 das in der Beschreibungseinleitung bereits mehrfach erwähnte "Out-of-position"-Problem dar. Ähnlich gelagert sind Fälle, bei denen ein erwachsener Insasse 3' (hier mit Strichlinien angedeutet) sich in nach vorn gebeugter Haltung auf dem Fahrzeugsitz 5 befindet.

Zum Airbagmodul 6 gehören ein Luftsack 7 und ein als Aufblaseinrichtung wirksamer Gasgenerator 8, der seinerseits durch eine Steuereinrichtung 9 beaufschlagbar ist. Diese ist unter anderem mit wenigstens einem Crashsensor 10 verbunden, der an allgemein bekannten Stellen des Fahrzeugaufbaus untergebracht sein kann. Es wird hier darauf hingewiesen, daß der Crashsensor 10 nur symbolisch dargestellt ist. Ergänzend oder alternativ kann ein über den gesamten Fahrzeugaufbau verteiltes Sensorsystem vorgesehen werden, das zur möglichst vollständigen Erfassung des gesamten Unfallgeschehens herangezogen werden kann. Über eine als Signalübertragungsglied ausgeführte Leitung 11 ist die Steuereinrichtung 9 allerdings mit dem Airbagmodul 6 in der Weise verbunden, daß das nach einer Zündung des Gasgenerators 8 sich ergebende Ausbreitungsverhalten für den Luftsack 7 erfaßt werden kann. Für den Luftsack 7 ist hier schematisch eine sogenannte Leporello-Faltung angedeutet. Es kommen aber auch andere Faltungstypen in Betracht (beispielsweise Drehfaltung, Raff-Faltung etc.).

Bei der in Figur 1 dargestellten Konfiguration ist noch ein Schußkanal 12 zu beachten, der in einem unteren Bereich oder unterhalb der Armaturentafel 4 vorgesehen ist. Der Schußkanal 12 sorgt dafür, daß weder bei dem vorgebeugten Insassen 3' noch bei dem stehenden Insassen 3 direkt der Kopf angeschossen wird. Es ergibt sich durch diese Art der Luftsackführung vielmehr eine Beaufschlagung von Körperteilen, die selbst weniger verletzungsgefährdet sind und darüber hinaus auch im Hinblick auf die Ausweichbewegung des jeweiligen Insassen nach dem Anschuß kinematisch günstiger sind. Gegenüber der Kontur der Armaturentafel 4 ist das Airbagmodul 6 hier zurückgesetzt, so daß er in normaler Haltung des Insassen 3' nicht erkennbar ist. Bei dieser Konfiguration kann auch auf eine den Airbagmodul 6 abdeckende Kappe oder Haube verzichtet werden. Der Verzicht auf ein solches Bauteil minimiert nicht nur den Fertigungs- und Montageaufwand, sondern trägt in entscheidender Weise dazu bei, daß das Luftkissen 8 ungehindert entfaltet werden kann.

Für den Ausschnitt A in Figur 1 zeigt Figur 2 ein vergrößerte Darstellung. Von herausgehobener Bedeutung ist hier ein induktiver Wegaufnehmer 13, durch den ein Zugglied 14 hindurchführbar ist. Dieses ist nach Art eines Seiles, Bandes oder Schlauches ausgeführt und weist entweder Metallabschnitte oder Metallpartikel auf, durch die während des Aufblasvorganges magnetische Unsymmetrien erzeugbar sind. Letztere ergeben sich durch Anlenkung des Zuggliedes 14 an einem vorderen Bereich 7a des Luftsackes 7 und dessen Bewegung in Richtung auf den Insassen 3 bzw. 3' zu. Das Zugglied 14 wird auf diese Weise durch den induktiven Wegaufnehmer 13 hindurchgezogen und erzeugt in diesem in Abhängigkeit von der Durchtrittsgeschwindigkeit meßtechnisch erfaßbare Impulse. Als vorgegebener Hüllenabschnitt 7a wird vorzugsweise ein Bereich in der Hülle des Luftsackes 7 gewählt, der als erstes von dem aus dem Gasgenerator 8 austretenden Massenstrom beaufschlagt wird und somit die höchste Wahrscheinlichkeit dafür gewährleistet, daß er ein Hindernis (Insassen 3 bzw. 3') zuerst vor anderen Hüllenabschnitten beaufschlagt. Das Zugglied 14 ist hier im Bereich des vorderen Abschnittes 7a angenäht und an einem Gehäuseteil des Airbagmoduls 6 so befestigt, daß es auch bei extremen Beschleunigungen stets Rückstellkräfte erfährt (Bremsen, Federn etc.). Dadurch werden Ergebnisverfälschungen durch Massenträgheitskräfte des Zuggliedes weitgehend reduziert.

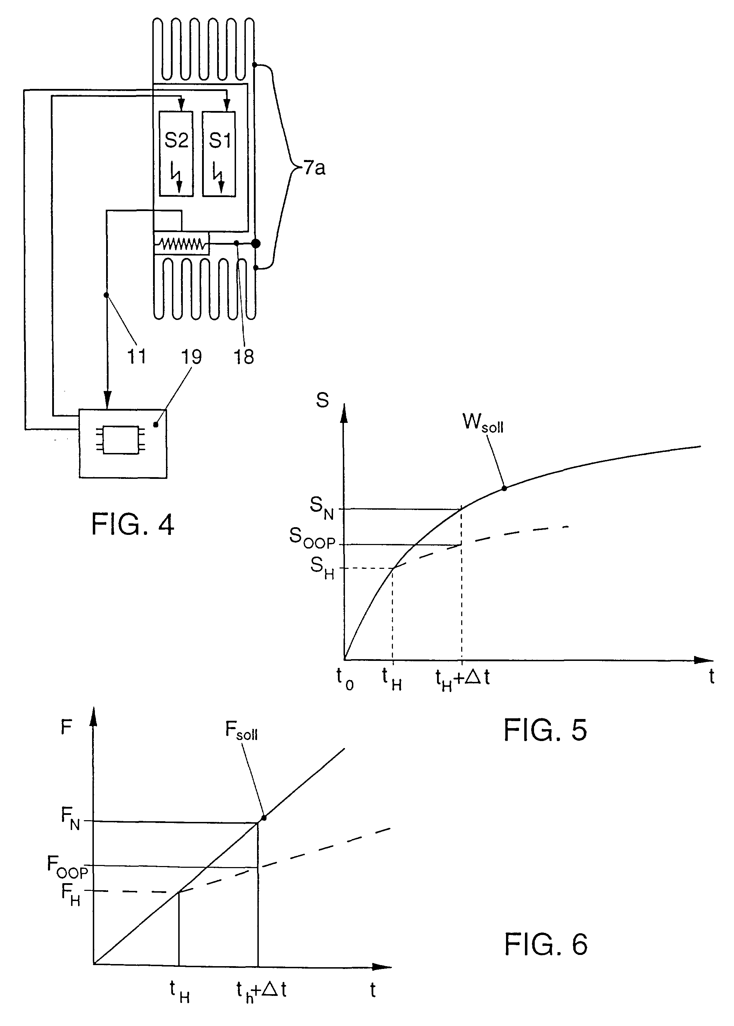

Der Gasgenerator 8 ist hier als Stufengenerator mit den Zündstufen S1 und S2 ausgeführt. Zu Beginn des Ausblasvorganges wird zunächst die Zündstufe S1 gezündet. In einer später noch zu erläuternden Weise (siehe Beschreibungen zu den Figuren 5 und 6) wird dann durch das Zusammenwirken des induktiven Wegaufnehmers 13 und der Steuereinrichtung 9 festgestellt, ob ein "Out-of-position"-Problem vorliegt. Bejahendenfalls wird die Zündung der Stufe S2 unterdrückt. Wird von der Steuereinheit 9 keine Beeinträchtigung der Ausbreitung des Luftkissens 6 festgestellt, erfolgt eine Zündung der Stufe S2, so daß sich das gesamte Luftkissen 7 vollständig entfalten kann.

Bei dem Ausführungsbeispiel gemäß Figur 3 wird als Wegaufnehmer ein Tachometer 15 eingesetzt, das an einem Generatorgehäuse 16 befestigt ist und über das Zugglied 14 genau dann antreibbar ist, wenn der vordere Bereich 7a durch Aktivierung des Gasgenerators 8 auf den Insassen 3 bzw. 3' zu bewegt wird. Als Faltung für den Luftsack 7 ist hier symbolisch eine sogenannte Raff-Faltung angedeutet, die eine besonders feinfühlige Abstimmung des jeweils erforderlichen Füllungsgrades ermöglicht. Als Aufblaseinrichtung ist hier ein einstufiger Gasgenerator vorgesehen, bei dem in einer Anfangsphase des Aufblasvorgangs der Massenstrom zunächst in den Luftsack hineingeführt wird. Ein Diffusorbereich 17 ist hier so ausgeführt, daß bei Sensierung eines Hindernisses (siehe hierzu die Beschreibung zu den Figuren 5 und 6) Ventilklappen 17a und 17b gemäß den Pfeilen B und C so verschwenkt werden, daß einerseits die Öffnung zum Luftsack 6 hin verschlossen wird und andererseits der vom Gasgenerator 8 gelieferte Massenstrom entsprechend der Pfeile D und E an dem Luftsack vorbei in die Armaturentafel 4 oder in einen hier nicht weiter bezifferten Fußraum hinein geleitet werden. Im Sinne der Erfindung ist hier die Aufblaseinrichtung insgesamt also durch den Gasgenerator 8, Diffusorbereich 17 und die aus den Ventilklappen 17a, b bestehende Ventilkonstruktion gebildet.

Als weitere Variante kann auch ein hier nur symbolisch angedeuteter Kraftaufnehmer 18 vorgesehen werden, an dem das Zugglied 14 befestigt ist. Dieses Sensorprinzip geht von der erfinderseitigen Überlegung aus, daß beim Aufprall des vorderen Bereiches 7a auf ein Hindernis wegen der Beeinträchtigung der Ausbreitung die Kraft an dem Kraftaufnehmer 18 mit einer Gradientenänderung erhöht wird. Diese Änderung der Krafterhöhung kann dann von der Steuereinrichtung 19 dahingehend verarbeitet werden, daß beispielsweise die Zündung der Stufe S2 unterbleibt.

Es wird hier ausdrücklich darauf hingewiesen, daß die in den Figuren 2 bis 4 dargestellten Konstruktionsprinzipien zur Faltung des Luftsackes 6, zur Umlenkung des Massenstromes, hinsichtlich des Einsatzes vor Kraft- und Wegaufnehmern und bezüglich der Verwendung von Stufengeneratoren beliebig variiert werden können.

Vorstellbar ist also auch die Verwendung des induktiven Wegaufnehmers 13 in Verbindung mit der dem Diffusor 17 zugeordneten Ventileinrichtung. Ebenso kann die in Figur 3 dargestellte Raff-Faltung auch für die Luftsäcke gemäß den Ausführungsbeispielen in Figur 2 und 4 verwendet werden.

Die Erfassung des Ausbreitungsverhalten kann auch optisch sensiert werden. Dafür ist das Zugglied 14 mit einem Streifenmuster zu versehen und beispielsweise an einem optischen Sensor nach Art eines Barcode-Lesers vorbeizuführen.

In Betracht gezogen werden können auch druckempfindliche Folien, die bei einem Aufprall auf ein Hindernis eine Veränderung ihres inneren Elektrowiderstandes erfahren. Derartige Folien können auf der Hülle im vorderen Bereich 7a aufgenäht oder als integraler Bestandteil in diese eingewebt sein.

Ergänzend oder alternativ zu den vorgenannten Sensierungen des Ausbreitungsverhaltens ist auch der Einsatz von Piezoelementen denkbar, die in dem vordere Bereich 7a in die Hülle des Luftsackes 7 so eingenäht sind, daß sie während des Aufblasvorganges auf den Insassen keine Projektilwirkung ausüben können. Zu diesem Zweck kann auf einer Innenwand der Hülle beispielsweise eine ein Piezoelement aufnehmende Tasche eingenäht sein, aus der heraus eine Signalübertragungsleitung zu der Steuereinrichtung 9 geführt wird.

Anhand der Figuren 5 und 6 soll das Wirkprinzip der vorstehend genannten Ausführungsbeispiele näher erläutert werden. So zeigt beispielsweise das Diagramm in Figur 5 das Weg-Zeit-Verhalten für den vorderen Bereich 7a. Eine mit Wₛₒₗₗ bezeichnete Kurve stellt sich immer genau dann ein, wenn der Luftsack 6 unbeeinträchtigt entfaltet werden kann. Die zu der Kurve Wₛₒₗₗ gehörenden Daten können in einem Kennfeld der Steuereinrichtung 9 abgelegt sein. Zum Zeitpunkt t_{O} erfolgt ausgelöst durch den Crashsenor 10 die Aktivierung der ein- oder mehrstufig ausgeführten Aufblaseinrichtung. Der Aufprall auf den Insassen 3 bzw. 3' erfolgt zum Zeitpunkt t_{H}. Bis dahin wurde die Wegstrecke s_{H} zurückgelegt. Dies ist also die Distanz zwischen dem Airbagmodul 6 und dem Insassen 3 bzw. 3' (siehe auch Figur 1). Letztere stellen gegenüber der Ausbreitung des Luftsackes 7 ein Hindernis dar und bewirken so eine Abweichung im Ausbreitungsverhalten derart, daß die hier mit Strichlinien angedeutete Ist-Kurve unterhalb der Kenn-Kurve Wₛₒₗₗ verläuft. Nach Ablauf einer vorgebbaren Zeitspanne mit dem Betrag Δt wird der tatsächlich vom vorderen Bereich 7a und damit auch vom Zugglied 14 zurückgelegte Weg erfaßt. Überschreitet dabei die Differenz zwischen dem Weg S_{N} (normale Ausbreitung des Luftsackes 6) und dem festgestellten Istweg S_{OOP} einen vorgegebenen Betrag, wird dies von der Steuereinrichtung 9 so verarbeitet, daß entweder die Zündung weiterer Stufen unterbleibt oder aber der Gasmassenstrom umgelenkt wird. Die Signalerfassung und auch die Signalverarbeitung kann beispielsweise durch Einschaltung von Differenziergliedern so variiert werden, daß die Änderung der Geschwindigkeit oder Beschleunigung des vorderen Bereiches 7a als Abbruchkriterium für die Luftsackfüllung gewählt werden kann.

Anstelle des Weg-Zeit-Verhaltens kann auch das Kraft-Zeit-Verhalten während des Aufblasvorganges ausgewertet werden. Diesbezüglich zeigt Figur 6 eine Kennlinie Fₛₒₗₗ für den Fall, daß eine unbeeinträchtigte Auffüllung des Luftsackes 7 erfolgt. Diese kann ergänzend oder alternativ zur Kennlinie Wₛₒₗₗ ebenfalls in der Steuereinrichtung 9 abgelegt sein. Zum Zeitpunkt t_{H} wird an dem Kraftaufnehmer 18 eine Kraft F_{H} ermittelt. Durch das Auftreffen des vorderen Bereiches 7a auf den Insassen 3 bzw. 3' erfolgt eine geringere Dehnung bzw. Stauchung in dem Kraftaufnehmer 18, so daß der tatsächlich zum Zeitpunkt t_{H} + Δt erfaßte Betrag der Kraft dem Wert F_{OOP} entspricht. Bei Überschreitung einer vorgegebenen Differenz zwischen den Beträgen F_{N} (Betrag der Kraft bei Normalausbreitung) und F_{OOP} wird wiederum ein Abbruch oder eine Einschränkung der Füllung des Luftsackes 7 eingeleitet. Auch bei der Auswertung der Kraftsignale können durch Einschaltung von Differenziergliedern Ableitungen nach der Zeit als Entscheidungskriterium ergänzend oder alternativ herangezogen werden.

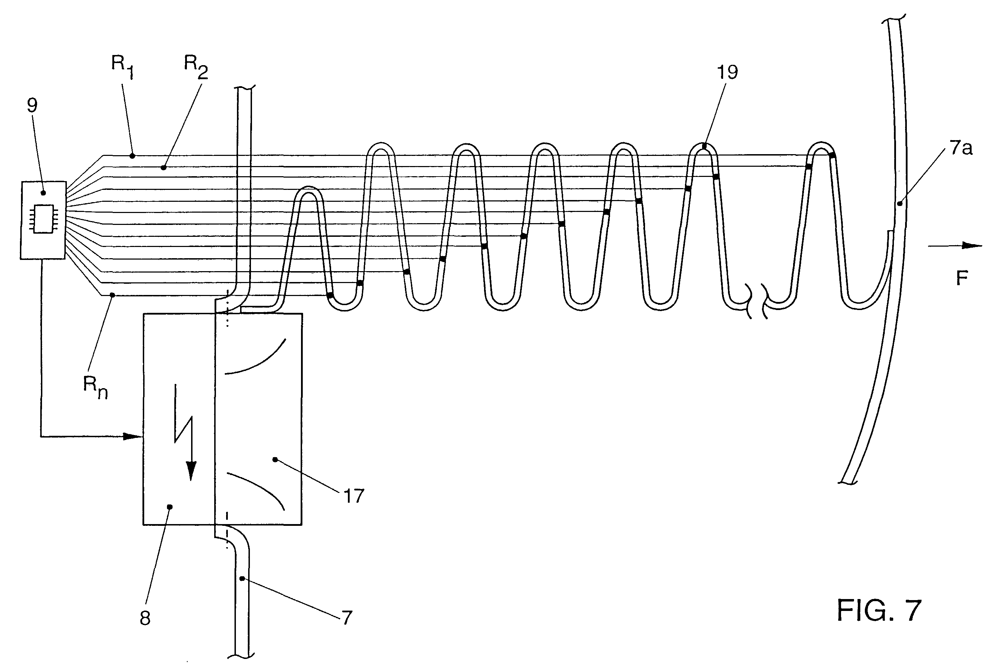

Das in Figur 7 skizzierte Ausführungsbeispiel zeigt als Faltkörper ein konventionell ausgeführtes und in der Praxis bereits erprobtes Fangband 19, das hier in einer Ruhestellung in Schlaufen zusammengelegt ist. An mit dicken Punkten symbolisch angedeuteten Halteabschnitten sind Reißelemente R₁ bis Rₙ befestigt, die mit der Steuereinrichtung 9 in der Weise verbunden sind, daß sie ein Signal genau dann abgeben, wenn nach Aktivierung der Aufblaseinrichtung 8 der vordere Hüllenabschnitt 7a in Richtung des Pfeiles F wegbewegt wird. Bei einer unbeeinträchtigten Ausbreitung des Luftsackes reißen die beispielsweise als Faden oder Dünnband bzw. Dünndraht ausgeführten Reißelemente der Reihe nach ab oder aus Steckern aus und erzeugen so ab dem Auslösezeitpunkt t₀ in der Steuereinrichtung 9 ein spezifisches Signalmuster über der Zeit.

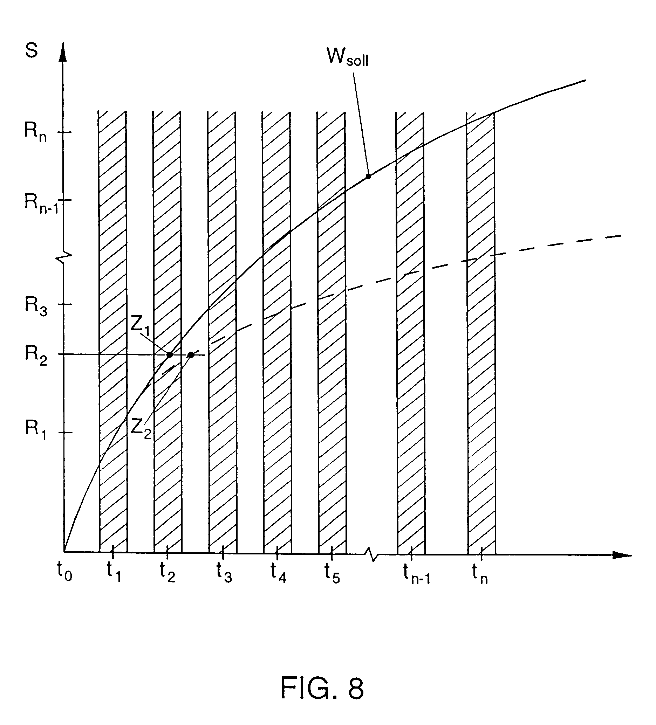

Eine Möglichkeit zur Auswertung eines derartigen Signalmusters zeigt Fig.8. So sind beispielsweise in der Steuereinrichtung 9 in einem Kennfeld entsprechend der mit Wₛₒₗₗ bezeichneten Kurve Sollzeitpunkte t₁ bis tₙ abgelegt, zu denen bei unbeeinträchtigter Füllung des Luftsackes 7 Signale von den Reißelementen R₁ bis Rₙ geliefert sein müssen. Jedem einzelnen dieser Sollzeitpunkte ist ein vorgegebenes Zeitfenster zugeordnet, innerhalb dessen jeweils feststellbar ist, ob der Luftsack 7 auf ein Hindernis getroffen ist. In einem solchen Fall - also bei Beinträchtigung der Ausbreitung wegen Vorliegens eines OOP-Problems - ergibt sich für den vorderen Hüllenabschnitt 7a der gestrichelt gezeichnete Weg-Zeit-Verlauf (siehe hierzu auch Beschreibung zur Figur 5). Daraus resultiert ein gegenüber dem Soll-Rißpunkt Z₁ verzögerter Abriß bzw. Durchriß des Reißelementes R₂, der zu einem Ist-Rißpunkt Z₂ führt. Letzterer liegt außerhalb des zu R₂ gehörenden Zeitfensters um t₂, was in der Steuereinrichtung 9 ein Steuersignal zur Veränderung der Füllcharakteristik des Luftsackes 7 bewirkt. Diese Art der Sensorik und Auswertung kann auf alle oben beschriebenen Faltungen von Luftsäcken und Beeinflussungsformen an Aufblaseinrichtungen angewendet werden.

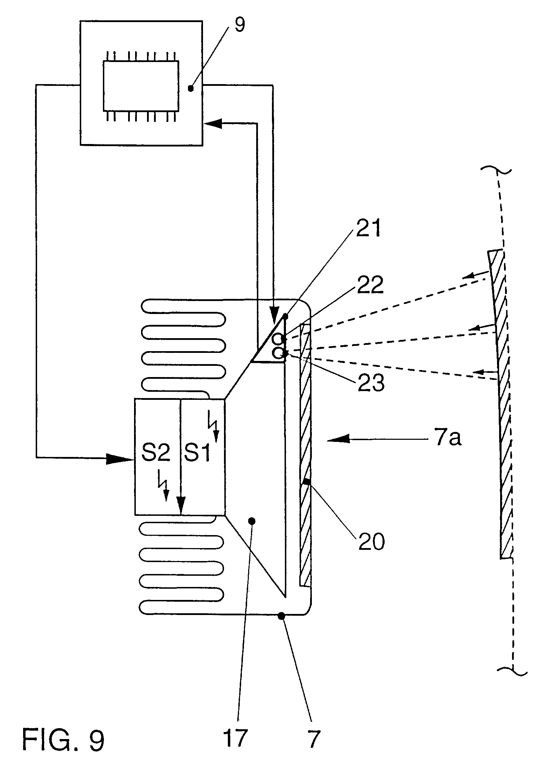

Alternativ zu den vorstehend beschriebenen Sensorprinzipien oder ergänzend als Absicherung kann die Verwendung von Infrarottechnik in Betracht gezogen werden. Figur 9 zeigt diesbezüglich den Hüllenabschnitt 7a des Luftsackes 7 mit einem Reflexionsmedium 20. Das Reflexionsmedium 20 kann integraler Bestandteil des Luftsackgewebes sein oder mittels Folienbeschichtung oder Bedampfung erzeugt werden. Weiterer wesentlicher Bestandteil ist eine Baueinheit 21, in der ein Infrarotstrahler 22 und ein Infrarotempfänger 23 zusammengefaßt sind. Die Baueinheit 21 ist hier im Randbereich des Diffusors 17 so befestigt, daß die aus den Gasgeneratoren S1 und gegebenenfalls auch S2 austretenden Massenströme über die Sensorik hinwegblasen.

Der gestrichelt dargestellte Abschnitt des Luftsackes 7 zeigt das Reflexionsmedium 20 in einer Position nach der Einleitung des Aufblasvorganges. Die von der Steuereinrichtung 9 vorgenommene Auslösung der Stufe S1 geht mit einer Aktivierung des Infrarotstrahlers 22 einher. Dieser wird also nur dann in Betrieb genommen, wenn er auch tatsächlich benötigt wird. Er muß also nicht dauernd in Bereitschaft gehalten werden. Die Plazierung und Ausrichtung des Infrarotstrahlers 22 ist im Zusammenhang mit dem Infrarotempfänger 23 so gewählt, daß bei einer Ausbreitung des Luftsackes 7 die von dem Reflexionsmedium 20 reflektierte Strahlung im Hinblick auf Laufzeiten und/oder Laufzeitunterschiede auswertbar ist, um so der Steuereinrichtung 9 Signale zum Ausbreitungsverhalten des Luftsackes 7 übermitteln zu können.

## Patentansprüche

1. Insassenschutzeinrichtung für ein Fahrzeug (1) mit
- wenigstens einem durch eine Aufblaseinrichtung (8) füllbaren Luftsack (7),
- einer mit einer Steuereinrichtung (9) verbundenen Sensorik (10, 13, 15, 18) zur Auslösung und/oder Beeinflussung der Aufblaseinrichtung (8) hinsichtlich der Füllcharakteristik des Luftsackes (7),
**dadurch gekennzeichnet, daß**
- die Sensorik Elemente (13, 14, 15, 18) aufweist, durch die das Ausbreitungsverhalten eines vorgegebenen Hüllenabschnittes (7a) des Luftsackes (7) erfaßbar ist,
- die von wenigstens einem der Elemente erzeugten Signale zum Ausbreitungsverhalten in der Steuereinrichtung (9) zur Beeinflussung der Aufblaseinrichtung (8) verarbeitbar sind.

2. Insassenschutzeinrichtung nach Anspruch 1, **dadurch gekennzeichnet, daß** die Elemente wenigstens gebildet sind durch
- ein mit dem Hüllenabschnitt (7a) verbundenes Zugglied (14) nach Art eines Seiles, Bandes oder Schlauches,
- durch wenigstens eine dem Zugglied (14) zugeordneten und mit der Steuereinrichtung (9) zur Signalübertragung verbundenen Wegaufnehmer oder Kraftaufnehmer.

3. Insassenschutzeinrichtung nach Anspruch 2, **dadurch gekennzeichnet, daß** der Wegaufnehmer nach Art eines Tachometers (15) ausgeführt ist.

4. Insassenschutzeinrichtung nach Anspruch 2, **dadurch gekennzeichnet, daß**
- dem Zugglied (14) magnetisch wirksame Metallpartikel oder Metallabschnitte zugeordnet sind,
- der Wegaufnehmer (13) zur Erfassung magnetischer Unsymmetrien hergerichtet ist, die während des Aufblasvorganges durch die Metallabschnitte oder Metallpartikel erzeugbar sind.

5. Insassenschutzeinrichtung nach Anspruch 2, **dadurch gekennzeichnet, daß**
- dem Zugglied (14) ein Streifenmuster zugeordnet ist,
- ein optischer Sensor vorgesehen ist, an dem während der Füllung des Luftsackes (7) zur Erfassung des Ausbreitungsverhaltens das Streifenmuster vorbeibewegbar ist.

6. Insassenschutzeinrichtung nach Anspruch 1, **dadurch gekennzeichnet, daß** die Elemente gebildet sind durch
- wenigstens eine an dem vorgegebenen Hüllenabschnitt (7a) befestigte Drucksensorfolie,
- ein die wenigstens eine Drucksensorfolie mit der Steuereinrichtung (9) verbinden des Signalübertragungsglied (11).

7. Insassenschutzvorrichtung nach Anspruch 1, **dadurch gekennzeichnet, daß** die Elemente gebildet sind durch
- wenigstens ein an dem vorgegebenen Hüllenabschnitt (7a) befestigtes Piezoelement,
- ein das wenigstens eine Piezoelement mit der Steuereinrichtung (9) verbindendes Signalübertragungsglied (11).

8. Insassenschutzeinrichtung nach wenigstens einen der Ansprüche 1 bis 7, **dadurch gekennzeichnet, daß** in der Steuereinrichtung (9)
- in wenigstens einem Kennfeld wenigstens eine Sollcharakteristik abgelegt ist, durch die das Weg-Zeit-Verhalten oder Kraft-Zeit-Verhalten und/oder deren Ableitungen nach der Zeit für eine durch Hindernisse unbeeinträchtigte Füllung des Luftsackes (7) beschrieben ist,
- die nach einer Aktivierung der Aufblaseinrichtung (8) durch die Elemente erzeugten Ist-Signale mit der wenigstens einen Sollcharakteristik vergleichbar sind,
- bei einer vorgegebenen Abweichung des Ist-Signals von der Sollcharakteristik ein Steuersignal zur Beeinflussung der Aufblaseinrichtung (8) erzeugbar ist.

9. Insassenschutzeinrichtung nach Anspruch 1, **dadurch gekennzeichnet, daß**
- die Aufblaseinrichtung durch einen Mehrstufengenerator oder einen im Massenstrom variabel einstellbaren Generator gebildet ist,
- die Zündung einzelner Stufen und/oder deren zeitliche Abfolge und/oder deren Massenstrom von der Steuereinrichtung (9) nach Maßgabe der von den Elementen (13, 15, 18) erzeugten Signale auslösbar ist.

10. Inassenschutzeinrichtung nach Anspruch 1, **dadurch gekennzeichnet, daß** die Aufblaseinrichtung (8) eine Ventilkonstruktion (17a, 17b) umfaßt, durch die beeinflußt von der Steuereinrichtung (9) nach Maßgabe der von den Elementen (13, 15, 18) erzeugten Signale der von wenigstens einem Gasgenerator (8) erzeugte Gasmassenstrom nach einer anfänglichen Füllung des Luftsackes (7) teilweise oder vollständig an diesem vorbei lenkbar ist.

11. Insassenschutzeinrichtung nach Anspruch 1, **dadurch gekennzeichnet, daß** der vorgegebene Hüllenabschnitt (7a) mit Bezug zur Aufblaseinrichtung (8) so gewählt ist, daß er bei der Füllung des Luftsackes (7) als erster Hüllenabschnitt vom Gasmassenstrom beaufschlagbar ist.

12. Insassenschutzeinrichtung nach Anspruch 1, **dadurch gekennzeichnet, daß** der Luftsack (7) nach Art einer Raff-Faltung um den Gasgenerator (8) herumgelegt ist und mit diesem ein Airbagmodul (6) bildet.

13. Insassenschutzeinrichtung nach wenigstens einem der Ansprüche 2 bis 5, **dadurch gekennzeichnet, daß** der Weg- oder Kraftaufnehmer an einem Gehäuse des Gasgenerators (8) befestigt ist.

14. Insassenschutzeinrichtung nach Anspruch 1, **dadurch gekennzeichnet, daß** der Luftsack (7) in einem dem Fußraum des Fahrzeugs zugeordneten Bereich unterhalb einer Armaturentafel (4) hinter deren Kontur zurückstehend angeordnet ist.

15. Insassenschutzeinrichtung nach Anspruch 14, **dadurch gekennzeichnet, daß** durch dem Fußraum zugewandte Oberflächenabschnitte der Armaturentafel (4) ein Schußkanal (12) für den Luftsack (7) gebildet ist.

16. Insassenschutzeinrichtung nach den Ansprüchen 14 oder 15, **dadurch gekennzeichnet, daß** der Luftsack (7) ohne Abdeckkappe unterhalb der Armaturentafel (4) angeordnet ist.

17. Insassenschutzeinrichtung nach den Ansprüchen 15 und 16, **dadurch gekennzeichnet, daß** die Tiefe und/oder Neigung des Schußkanals (12) so gewählt ist, daß für einen auf dem Fahrzeugsitz (5) vorschriftsmäßig untergebrachten Insassen (3) der in die Armaturentafel (4) verbaute Luftsack (7) nicht erkennbar ist.

18. Insassenschutzeinrichtung nach Anspruch 1, **dadurch gekennzeichnet, daß** die Elemente gebildet sind durch
- wenigstens einen Falt- oder Dehnkörper (19), der
= mit einem ersten Ende an dem vorgegebenen Hüllenabschnitt (7a) und mit einem zweiten Ende zumindest mittelbar an einem ortsfesten Bauteil des Fahrzeugs befestigt ist,
= in einer Ruhestellung eine verkürzte Ausdehnung aufweist,
= der durch die Aublaseinrichtung in seiner Ausdehnung verlängerbar ist,
- wenigstens ein Reißelement (R₁ - Rₙ), das
= mit einem ersten Ende auf dem Falt- oder Dehnkörper im Bereich eines vorgegebenen Halteabschnittes und mit einem zweiten Ende zumindest mittelbar an einem ortsfesten Bauteil des Fahrzeugs befestigt ist,
= durch die Wirkung der Aublaseinrichtung (8) zur Signalerzeugung auftrennbar oder aus einer der vorgenannten Befestigungen lösbar ist.

19. Insassenschutzeinrichtung nach Anspruch 18, **dadurch gekennzeichnet, daß** der Faltkörper nach Art eines in Schlaufen zusammengelegten Fangbandes (19) gebildet ist und mehrere faden- oder dünnbandartige Reißelemente (R₁ - Rₙ) vorgesehen sind, von denen jeweils eines an einem vorgegebenen Halteabschnitt befestigt ist, wobei die einzelnen Halteabschnitte entsprechend einer vorgegebenen Anordnung entlang des Fangbandes verteilt sind.

20. Insassenschutzeinrichtung nach Anspruch 18 oder 19, **dadurch gekennzeichnet, daß** durch die Auftrennung des wenigstens einen Reißelementes eine elektrische Leitung zur Gewinnung eines Schaltsignals unterbrechbar ist.

21. Insassenschutzeinrichtung nach Anspruch 18 oder 19, **dadurch gekennzeichnet, daß**
- die Befestigung durch einen Steckersockel gebildet ist, in dem ein am zweiten Ende des Reißelementes gehaltenes Steckergegenstück arretierbar ist,
- die Steckerverbindung zur Gewinnung eins Schaltsignales durch die Wirkung der Aufblaseinrichtung (8) lösbar ist.

22. Insassenschutzeinrichtung nach Anspruch 18, **dadurch gekennzeichnet, daß** in der Steuereinrichtung (9)
- in wenigstens einem Kennfeld wenigstens ein vorgegebener Zeitabschnitt mit Bezug auf den Auslösezeitpunkt der Aufblaseinrichtung (8) abgelegt ist, dem wenigstens ein aus der Auftrennung oder Lösung der Befestigung erzeugtes Signal zugeordnet ist,
- ein Steuersignal zur Veränderung der Füllcharakteristik des Luftsackes (7) erzeugbar ist, wenn das Signal nach der Aulösung der Aufblaseinrichtung (8) nicht innerhalb der vorgegebenen Zeitspanne erfaßt wird.

23. Insassenschutzeinrichtung nach Anspruch 1, **dadurch gekennzeichnet, daß** die Elemente wenigstens gebildet sind durch
- wenigstens einen von der Steuereinrichtung (9) einschaltbaren Infrarotstrahler (22),
- wenigstens ein dem Luftsack (7) zugeordnetes Reflexionsmedium (20) für Infrarotlicht,
- wenigstens einen mit der Steuereinrichtung (9) verbundenen Infrarotempfänger, durch den vom Reflexionsmedium (20) ausgehende Strahlung detektierbar ist.

24. Insassenschutzeinrichtung nach Anspruch 23, **dadurch gekennzeichnet, daß** das Reflexionsmedium (20) durch eine Beschichtung des Luftsackgewebes gebildet ist.

25. Insassenschutzeinrichtung nach Anspruch 24, **dadurch gekennzeichnet, daß** der Luftsack (7) aus einem Infrarotlicht reflektierenden Gewebe hergestellt ist.

26. Insassenschutzeinrichtung nach Anspruch 23, **dadurch gekennzeichnet, daß** der Infrarotstrahler (21) und der Infrarotempfänger (22) zu einer Baueinheit (21) zusammengefaßt sind.

27. Insassenschutzeinrichtung nach Anspruch 26, **dadurch gekennzeichnet, daß** die Baueinheit an einem Gehäuseteil (17) der Aufblaseinrichtung (8) befestigt ist.

## Claims

1. Vehicle occupant protection device for a vehicle (1) having
- at least one airbag (7) which can be inflated by means of an inflating device (8),
- a sensor system (10, 13, 15, 18), connected to a control device (9), for triggering and/or influencing the inflating device (7a) in terms of the inflation characteristic of the airbag (7),
**characterized in that**
- the sensor system has elements (13, 14, 15, 18) which can sense the expansion behaviour of a predefined envelope section (7a) of the airbag (7),
- the signals relating to the expansion behaviour which are generated by at least one of the elements can be processed in the control device (9) in order to influence the inflating device (8).

2. Vehicle occupant protection device according to Claim 1, **characterized in that** the elements are formed at least by
- a pulling element (14), connected to the envelope section (7a), in the manner of a cable, belt or hose,
- at least one position pickup or force pickup which is assigned to the pulling element (14) and connected to the control device (9) for the transmission of signals.

3. Vehicle occupant protection device according to Claim 2, **characterized in that** the position pickup is embodied in the manner of a tachometer (15).

4. Vehicle occupant protection device according to Claim 2, **characterized in that**
- the pulling element (14) is assigned magnetically active metal particles or metal sections,
- the position pickup (13) is designed to sense magnetic asymmetries which can be generated by the metal sections or metal particles during the inflation process.

5. Vehicle occupant protection device according to Claim 2, **characterized in that**
- the pulling element (14) is assigned a striped pattern,
- an optical sensor is provided, past which the striped pattern can be moved during the inflation of the airbag (7) in order to sense the expansion behaviour.

6. Vehicle occupant protection device according to Claim 1, **characterized in that** the elements are formed by
- at least one pressure sensor foil which is attached to the predefined envelope section (7a),
- a signal transmitting element (11) which connects the at least one pressure sensor foil to the control device (9).

7. Vehicle occupant protection device according to Claim 1, **characterized in that** the elements are formed by
- at least one piezoelectric element which is attached to the predefined envelope section (7a),
- a signal transmitting element (11) which connects the at least one piezoelectric element to the control device (9).

8. Vehicle occupant protection device according to at least one of Claims 1 to 7, **characterized in that**, in the control device (9),
- at least one setpoint characteristic, by means of which the travel/time behaviour or force/time behaviour and/or derivations according to the time for inflation of the airbag (7) which is not adversely affected by obstacles is described, is stored in at least one characteristic map,
- the actual signals which are generated by the elements after the activation of the inflating device (8) can be compared with the at least one setpoint characteristic,
- given a predefined deviation of the actual signal from the setpoint characteristic, a control signal for influencing the inflating device (8) can be generated.

9. Vehicle occupant protection device according to Claim 1, **characterized in that**
- the inflating device is formed by a multi-stage generator or a generator whose mass flow can be adjusted variably,
- the firing of individual stages and/or their chronological sequence and/or their mass flow can be triggered by the control device (9) in accordance with the signals generated by the elements (13, 15, 18).

10. Vehicle occupant protection device according to Claim 1, **characterized in that** the inflating device (8) comprises a valve structure (17a, 17b) by means of which the gas mass flow generated by at least one gas generator (8) can be diverted, after initial filling of the airbag (7), past said airbag, either partially or completely, under the influence of the control device (9) and in accordance with the signals generated by the elements (13, 15, 18).

11. Vehicle occupant protection device according to Claim 1, **characterized in that** the predefined envelope section (7a) is selected with respect to the inflating device (8) in such a way that when the airbag (7) is filled, it is the first envelope section to be supplied with the gas mass flow.

12. Vehicle occupant protection device according to Claim 1, **characterized in that** the airbag (7) is placed around the gas generator (8) in the manner of a ruff fold, and together with said gas generator (8) forms an airbag module (6).

13. Vehicle occupant protection device according to at least one of Claims 2 to 5, **characterized in that** the position pickup or force pickup is attached to a housing of the gas generator (8).

14. Vehicle occupant protection device according to Claim 1, **characterized in that** the airbag (7) is arranged in a region assigned to the footwell of the vehicle, underneath a dashboard (4) and set back behind its contour.

15. Vehicle occupant protection device according to Claim 14, **characterized in that** surface sections of the dashboard (4) which face the footwell form a firing duct (12) for the airbag (7).

16. Vehicle occupant protection device according to Claims 14 or 15, **characterized in that** the airbag (7) is arranged without a covering cap underneath the dashboard (4).

17. Vehicle occupant protection device according to Claims 15 and 16, **characterized in that** the depth and/or inclination of the firing duct (12) is/are selected in such a way that the airbag (7) which is installed in the dashboard (4) is not visible to a vehicle occupant (3) who is seated on the vehicle seat (5) in accordance with the regulations.

18. Vehicle occupant protection device according to Claim 1, **characterized in that** the elements are formed by
- at least one folding element or expansion element (19) which
= is attached by a first end to the predefined envelope section (7a) and by a second end at least indirectly to a fixed component of the vehicle,
= has a shortened extent in a position of rest,
= can be lengthened in its extent by the inflating device,
- at least one tearing element (R₁-Rₙ) which
= is attached by a first end to the folding or expansion element in the region of a predefined holding section and by a second end at least indirectly to a fixed component of the vehicle,
= can be disconnected by the action of the inflation device (8) for the generation of signals or it can be released from one of the abovementioned attachments.

19. Vehicle occupant protection device according to Claim 18, **characterized in that** the folding element is formed in the manner of an intercepting belt (19) which is folded together in loops, and a plurality of thread-like or thin belt-like tearing elements (R₁-Rₙ) are provided, each of which is attached to a predefined holding section, the individual holding sections being distributed along the intercepting belt in a predefined arrangement.

20. Vehicle occupant protection device according to Claim 18 or 19, **characterized in that** an electrical line for acquiring a switching signal can be disconnected by forming a break in the at least one tearing element.

21. Vehicle occupant protection device according to Claim 18 or 19, **characterized in that**
- the attachment is formed by a plug receptable in which a plug mating element which is held at the second end of the tearing element can be locked,
- the plug connection for acquiring a switching signal can be released by the action of the inflating device (8).

22. Vehicle occupant protection device according to Claim 18, **characterized in that**, in the control device (9),
- at least one predefined time section with respect to the triggering time of the inflation device (8) is stored in at least one characteristic diagram, to which time section at least one signal which is produced from the disconnection or release of the attachment is assigned,
- a control signal for changing the inflation characteristic of the airbag (7) can be generated if the signal is not sensed within the predefined time period after the triggering of the inflating device (8).

23. Vehicle occupant protection device according to Claim 1, **characterized in that** the elements are formed at least by
- at least one infrared radiator (22) which can be switched on by the control device (9),
- at least one reflection medium (20), assigned to the airbag (7), for infrared light,
- at least one infrared receiver, connected to the control device (9), by means of which radiation leaving the reflection medium (22) can be detected.

24. Vehicle occupant protection device according to Claim 23, **characterized in that** the reflection medium (20) is formed by a coating of the airbag woven fabric.

25. Vehicle occupant protection device according to Claim 24, **characterized in that** the airbag (7) is manufactured from an infrared-reflective woven fabric.

26. Vehicle occupant protection device according to Claim 23, **characterized in that** the infrared radiator (21) and the infrared receiver (22) are combined to form one physical unit (21).

27. Vehicle occupant protection device according to Claim 26, **characterized in that** the physical unit is attached to a housing part (17) of the inflating device (8).

## Revendications

1. Système de protection des occupants pour un véhicule (1) comprenant
- au moins un coussin d'air (7) pouvant être rempli par un dispositif de gonflage (8),
- un réseau de capteurs (10, 13, 15, 18) relié à un dispositif de commande (9) pour déclencher et/ou influencer le dispositif de gonflage (8) du point de vue de la caractéristique de remplissage du coussin d'air (7),
**caractérisé en ce que**
- le réseau de capteurs présente des éléments (13, 14, 15, 18) qui permettent de détecter le comportement de déploiement d'une section d'enveloppe (7a) prédéfinie du coussin d'air (7),
- les signaux relatifs au comportement de déploiement générés par au moins l'un des éléments peuvent être traités dans le dispositif de commande (9) pour influencer le dispositif de gonflage (8).

2. Système de protection des occupants selon la revendication 1, **caractérisé en ce que** les éléments sont au moins formés par
- un élément de traction (14) sous la forme d'un câble, d'une bande ou d'un tuyau, relié à la section d'enveloppe (7a),
- au moins un capteur de déplacement ou un capteur de force associé à l'élément de traction (14) et relié au dispositif de commande (9) pour la transmission du signal.

3. Système de protection des occupants selon la revendication 2, **caractérisé en ce que** le capteur de déplacement est réalisé à la manière d'un tachymètre (15).

4. Système de protection des occupants selon la revendication 2, **caractérisé en ce que**
- des particules métalliques ou des morceaux de métal à action magnétique sont associés à l'élément de traction (14),
- le capteur de déplacement (13) est préparé de manière à détecter les asymétries magnétiques qui peuvent être produites par les morceaux de métal ou les particules métalliques pendant le processus de gonflage.

5. Système de protection des occupants selon la revendication 2, **caractérisé en ce que**
- un dessin à rayures est associé à l'élément de traction (14),
- il est prévu un capteur optique devant lequel le dessin à rayures peut être déplacé pendant le remplissage du coussin d'air (7) pour détecter le comportement de déploiement.

6. Système de protection des occupants selon la revendication 1, **caractérisé en ce que** les éléments sont formés par
- au moins une membrane de capteur de pression fixée à la section d'enveloppe (7a) prédéfinie,
- un élément de transmission du signal (11) reliant l'au moins une membrane de capteur de pression avec le dispositif de commande (9).

7. Système de protection des occupants selon la revendication 1, **caractérisé en ce que** les éléments sont formés par
- au moins un élément piézoélectrique fixé à la section d'enveloppe (7a) prédéfinie,
- un élément de transmission du signal (11) reliant l'au moins un élément piézoélectrique avec le dispositif de commande (9).

8. Système de protection des occupants selon au moins l'une des revendications 1 à 7, **caractérisé en ce que** dans le dispositif de commande (9)
- au moins une caractéristique de consigne est enregistrée dans au moins un champ caractéristique, laquelle décrit l'évolution du déplacement dans le temps ou l'évolution de la force dans le temps et/ou leurs dérivées après la durée nécessaire pour un remplissage du coussin d'air (7) non affecté par des obstacles,
- les signaux réels générés par les éléments après l'activation du dispositif de gonflage (8) peuvent être comparés avec au moins une caractéristique de consigne,
- en cas de différence prédéfinie du signal réel par rapport à la caractéristique de consigne, un signal de commande peut être produit pour influencer le dispositif de gonflage (8).

9. Système de protection des occupants selon la revendication 1, **caractérisé en ce que**
- le dispositif de gonflage est réalisé sous la forme d'un générateur à plusieurs étages ou un générateur dont le débit massique est variable,
- l'allumage de chacun des étages et/ou leur succession dans le temps et/ou leur débit massique peut être déclenché par le dispositif de commande (9) d'après les indications des signaux générés par les éléments (13, 15, 18).

10. Système de protection des occupants selon la revendication 1, **caractérisé en ce que** le dispositif de gonflage (8) comprend un ensemble de vannes (17a, 17b) par le biais desquelles le débit massique de gaz produit par au moins un générateur de gaz (8), influencé par le dispositif de commande (9) d'après les indications des signaux générés par les éléments (13, 15, 18), peut être dévié entièrement ou partiellement au niveau de celles-ci après un début de remplissage du coussin d'air (7).

11. Système de protection des occupants selon la revendication 1, **caractérisé en ce que** la section d'enveloppe (7a) prédéfinie est choisie par rapport au dispositif de gonflage (8) de à ce qu'elle soit exposée au débit massique de gaz en tant que première section d'enveloppe lors du remplissage du coussin d'air (7).

12. Système de protection des occupants selon la revendication 1, **caractérisé en ce que** le coussin d'air (7) est placé autour du générateur de gaz (8) à la manière d'un drap plié et forme avec lui un module de coussin gonflable de sécurité (6).

13. Système de protection des occupants selon au moins l'une des revendications 2 à 5, **caractérisé en ce que** le capteur de déplacement ou de force est fixé à un boîtier du générateur de gaz (8).

14. Système de protection des occupants selon la revendication 1, **caractérisé en ce que** le coussin d'air (7) est disposé en retrait dans une zone dédiée dans l'espace pour les jambes du véhicule sous un tableau de bord (4) derrière son contour.

15. Système de protection des occupants selon la revendication 14, **caractérisé en ce qu'**un conduit de détente (12) pour le coussin d'air (7) est réalisé à travers la portion de la surface du tableau de bord (4) qui est dirigée vers l'espace pour les jambes.

16. Système de protection des occupants selon les revendications 14 ou 15, **caractérisé en ce que** le coussin d'air (7) est disposé sous le tableau de bord (4) sans couvercle de protection.

17. Système de protection des occupants selon les revendications 15 et 16, **caractérisé en ce que** la profondeur et/ou l'inclinaison du conduit de détente (12) est choisie de manière à ce que le coussin d'air (7) installé dans le tableau de bord (4) ne puisse pas être reconnu par un occupant (3) qui se tient sur le siège du véhicule (5) conformément aux instructions.

18. Système de protection des occupants selon la revendication 1, **caractérisé en ce que** les éléments sont formés par
- au moins un corps plié ou extensible (19) qui
= est fixé par une première extrémité à la section d'enveloppe (7a) prédéfinie et par une deuxième extrémité au moins de manière indirecte à un élément fixe du véhicule,
= présente une extension raccourcie en position de repos,
= peut être rallongé dans son extension par le dispositif de gonflage,
- au moins un élément d'arrachage (R₁ - Rₙ) qui
= est fixé par une première extrémité au corps plié ou extensible dans la zone d'une section d'attache prédéfinie et par une deuxième extrémité au moins de manière indirecte à un élément fixe du véhicule,
= peut être arraché ou détaché de l'une des fixations mentionnées précédemment sous l'effet du dispositif de gonflage (8) pour générer un signal.

19. Système de protection des occupants selon la revendication 18, **caractérisé en ce que** le corps pliant est réalisé à la manière d'une bande de garde (19) repliée en boucle et plusieurs éléments d'arrachage (R₁ - Rₙ) de type fils ou bandes minces sont prévus, chacun d'entre eux étant fixé à une section d'attache prédéfinie, les différentes sections d'attache étant réparties le long de la bande de garde en fonction d'un arrangement prédéfini.

20. Système de protection des occupants selon la revendication 18 ou 19, **caractérisé en ce que** la séparation d'au moins un élément d'arrachage peut provoquer la rupture d'un câble électrique pour obtenir un signal de commutation.

21. Système de protection des occupants selon la revendication 18 ou 19, **caractérisé en ce que**
- la fixation est réalisée sous la forme d'une embase femelle dans laquelle peut être bloquée la pièce mâle correspondante maintenue à la deuxième extrémité de l'élément d'arrachage,
- la connexion destinée à obtenir un signal de commutation peut être séparée sous l'effet du dispositif de gonflage (8).

22. Système de protection des occupants selon la revendication 18, **caractérisé en ce que** dans le dispositif de commande (9)
- au moins un intervalle de temps prédéfini est enregistré dans au moins un champ caractéristique en référence au moment de déclenchement du dispositif de gonflage (8), auquel est affecté au moins un signal généré par la séparation ou le détachement de la fixation,
- un signal de commande peut être généré pour modifier la caractéristique de remplissage du coussin d'air (7) lorsque le signal n'est pas détecté dans l'intervalle de temps prédéfini après le déclenchement du dispositif de gonflage (8).

23. Système de protection des occupants selon la revendication 1, **caractérisé en ce que** les éléments sont au moins formés par
- au moins un projecteur à infrarouges (22) qui peut être mis en marche par le dispositif de commande (9),
- au moins un support réfléchissant (20) la lumière infrarouge associé au coussin d'air (7),
- au moins un récepteur à infrarouge relié au dispositif de commande (9) qui permet de détecter le rayonnement émis par le support réfléchissant (20).

24. Système de protection des occupants selon la revendication 23, **caractérisé en ce que** le support réfléchissant (20) est formé par un revêtement du tissu du coussin d'air.

25. Système de protection des occupants selon la revendication 24, **caractérisé en ce que** le coussin d'air (7) est fabriqué dans un tissu réfléchissant la lumière infrarouge.

26. Système de protection des occupants selon la revendication 23, **caractérisé en ce que** le projecteur à infrarouges (21) et le récepteur à infrarouges (22) sont regroupés en un seul module (21).

27. Système de protection des occupants selon la revendication 26, **caractérisé en ce que** le module est fixé à une partie du boîtier (17) du dispositif de gonflage (8).
